# FASCICULE DE BREVET EUROPEEN

(11) **EP 2 408 851 B1**
(45) Date de publication et mention de la délivrance du brevet: **13.08.2014**
(21) Numéro de dépôt: 10708221.6
(22) Date de dépôt: 15.03.2010
(51) Int. Cl.: C08J 5/24

(54) **UTILISATION DE RESINES DURCISSABLES CONTENANT UN PREPOLYMERE A BASE DE (METH)ACRYLATE DE GLYCIDYLE POUR LA FABRICATION DE MATERIAUX COMPOSITES A USAGE SPATIAL**
VERWENDUNG VON HARTBAREN HARZEN, DIE EIN PREPOLYMER AUS GLYCIDYL(METH)ACRYLAT ENTHALTEN, FÜR DIE HERSTELLUNG VON VERBUNDSTOFFEN, ZU DIESE IM ALL ANZUWENDEN
USE OF HARDENABLE RESINS CONTAINING A PREPOLYMER BASED ON GLYCIDYL (METH)ACRYLATE FOR THE PREPARATION OF COMPOSITE MATERIALS FOR USE IN SPACE

(30) Priorité: 16.03.2009 FR 0951647
(43) Date de publication de la demande: 25.01.2012
(73) Titulaire: Astrium SAS, 75016 Paris (FR); Universite De Reims, 51097 Reims Cedex (FR); Centre National de la Recherche Scientifique, 75016 Paris (FR)
(72) Inventeur: DEFOORT, Brigitte, F-33160 Saint Medard En Jalles (FR); COQUERET, Xavier, F-51100 Reims (FR); MILLE, Marion, F-51100 Reims (FR)
(74) Mandataire: Ilgart, Jean-Christophe
(86) Numéro de dépôt international: PCT/EP2010/053291
(87) Numéro de publication internationale: WO 2010/106017

(56) Documents cités:
- FR-A1- 2 876 983
- US-A- 3 817 946
- LOUBAT C; BOUTEVIN B: "Telomerization of acrylic acid with mercaptans: Part 2. Kinetics of the synthesis of star-shaped macromolecules of acrylic acid" POLYMER INTERNATIONAL, vol. 50, 1 avril 2000 (2000-04-01), pages 375-380, XP009123945
- PARIS R ET AL: "Synthesis of epoxy functionalized four-armed star diblock copolymers by atom transfer radical polymerization" REACTIVE & FUNCTIONAL POLYMERS, ELSEVIER SCIENCE PUBLISHERS BV, NL, vol. 68, no. 5, 1 mai 2008 (2008-05-01), pages 1004-1012, XP022595218 ISSN: 1381-5148 [extrait le 2008-03-04]
- DATABASE WPI Week 200634 Thomson Scientific, London, GB; AN 2006-325080 XP002549634 & JP 2006 117888 A (HITACHI CHEM CO LTD) 11 mai 2006 (2006-05-11)
- DATABASE COMPENDEX [Online] ENGINEERING INFORMATION, INC., NEW YORK, NY, US; 1 janvier 2002 (2002-01-01), ALLRED R E ET AL: "UV rigidizable carbon-reinforced isogrid inflatable booms" XP002549635 Database accession no. E2002277001455
- CADOGAN D P ET AL: "Rigidizable materials for use in gossamer space inflatable structures" AIAA/ASME/ASCE/AHS/ASC STRUCTURES, STRUCTURAL DYNAMICS ANDMATERIALS CONFERENCE AND EXHIBIT AND AIAA/ASME/AHS ADAPTIVESTRUCTURES FORUM, XX, XX, 16 avril 2001 (2001-04-16), pages 1-18, XP002323822 cité dans la demande
- ZALDIVAR R J; KOBAYASHI R W; DICKINSON T J: "Exposure of polycyanurate and epoxy matrix composites to hypergolic rocket fuel components" JOURNAL OF SPACECRAFT AND ROCKETS, vol. 39, no. 1, 1 janvier 2002 (2002-01-01), pages 99-105, XP001539571

## Description

### DOMAINE TECHNIQUE

La présente invention se rapporte à l'utilisation de résines durcissables contenant un prépolymère à base de (méth)acrylate de glycidyle pour la fabrication de matériaux composites à usage spatial.

Elle se rapporte également à des prépolymères particuliers à base de (méth)acrylate de glycidyle qui sont propres à entrer dans la constitution de ces résines durcissables.

Elle se rapporte en outre à des structures qui sont conçues pour se rigidifier dans l'espace, typiquement après s'y être déployées, et qui comprennent des matériaux composites préparés à partir desdites résines durcissables.

De telles structures sont notamment les structures Gossamer et les structures en treillis du type de celles décrites dans la demande de brevet français publiée sous le numéro 2 887 523 **[1]**.

### ÉTAT DE LA TECHNIQUE ANTÉRIEURE

Le volume limité sous les coiffes des lanceurs spatiaux a conduit à concevoir des structures légères, qui sont lancées repliées et qui se déploient une fois parvenues dans l'espace, ce qui est, entre autres, le cas des structures Gossamer.

Ces structures, qui peuvent notamment consister en panneaux solaires, réflecteurs, pares-soleil, antennes, miroirs, voiles solaires ou analogues, comprennent un ensemble d'éléments creux, généralement tubulaires, qui sont constitués de membranes fines, repliées sur elles-mêmes de sorte à former un soufflet et dont le déploiement dans l'espace résulte de leur remplissage par un gaz sous pression qui est stocké dans un réservoir attenant.

Une fois déployées dans l'espace, les structures Gossamer nécessitent d'être rigidifiées pour pouvoir résister à d'éventuels chocs avec des météorites.

C'est la raison pour laquelle il a été proposé de réaliser les membranes des structures Gossamer dans des matériaux composites qui sont constitués d'un matériau fibreux, par exemple un tissu de fibres de carbone ou de Kevlar^{®}, que l'on imprègne d'une composition à base d'une résine durcissable du type résine époxyde, et d'induire le durcissement de cette résine après déploiement desdites structures dans l'espace, par exemple par une augmentation de la température ou par l'application d'ultraviolets, lequel durcissement entraîne la rigidification des matériaux composites.

Il est bien connu que, dans le vide spatial, les matériaux dégazent soit parce que leur surface a été polluée soit parce qu'ils contiennent ou génèrent par dégradation des composés volatils.

Or, ces dégazages ont des conséquences néfastes.

En effet, si les composés volatils sont des constituants du matériau qui dégaze ou résultent de la dégradation de constituants de ce matériau, alors ce dernier peut perdre ses propriétés en même temps que ses constituants. De plus, un dégazage constitue de façon générale une pollution du milieu. Ainsi, par exemple, il peut conduire dans le cas d'une sonde spatiale à la formation de dépôts sur les instruments optiques qui peuvent, à leur tour, conduire à la perte de fonctionnalité de ces instruments.

Concernant le dégazage dans l'espace des résines durcissables entrant dans la constitution des membranes des structures Gossamer, il existe extrêmement peu de données dans la littérature.

En fait, les données existantes se limitent à un article aux noms de Cadogan et de Scaborough, qui a été publié en 2001 par l'American Institute of Aeronautics and Astronautics (AIAA Gossamer Spacecraft Forum, 16-19 avril 2001, Seattle, WA, [2**]**) et dans lequel ces auteurs minimisent l'importance de ce dégazage et, par là-même, de ses conséquences. En effet, Cadogan et Scaborough considèrent que le dégazage serait extrêmement limité du fait que les couches de matériau fibreux imprégné de résine durcissable sont prises en sandwich entre deux films étanches aux gaz.

En réalité, il s'avère que les films polymères dont l'utilisation est préconisée pour réaliser les parois de structures Gossamer ne sont pas réellement étanches aux gaz. De plus, l'expérience montre qu'il est même souhaitable que les parois des structures Gossamer soient au moins partiellement perméables aux gaz (comme décrit sans la demande internationale PCT publiée sous le n° WO 2006/024805, **[3]**) pour éviter de maintenir des poches d'air entre les couches de matériau fibreux, ces poches d'air pouvant, en effet, provoquer une déformation des structures et perturber leur déploiement dans l'espace.

Le problème des conséquences néfastes du dégazage dans l'espace des résines durcissables présentes dans les structures Gossamer est donc bien réel.

Ce problème se pose également et dans les mêmes termes pour toutes les autres structures destinées à être déployées et rigidifiées dans l'espace et dans lesquelles il est prévu d'utiliser un matériau fibreux imprégné d'une composition à base d'une résine durcissable comme les structures à cordes décrites dans la référence **[1]** précitée.

Un certain nombre de documents brevets traite du dégazage de résines durcissables.

Toutefois, il convient de remarquer que, non seulement ces documents visent des applications (adhésifs, emballages, protection contre l'incendie, photoglyptographie pour microprocesseurs, microélectronique, ...) qui n'ont rien à voir avec le domaine spatial, mais que, de plus, leur objectif est d'éviter un dégazage après polymérisation des résines ou au cours de la dépolymérisation de ces résines alors que, dans le cas des structures Gossamer et autres structures légères à déploiement et rigidification dans l'espace, c'est surtout le dégazage qui se produit avant que les résines ne polymérisent et pendant la polymérisation de ces résines qui est problématique.

Les Inventeurs se sont donc fixé pour but de fournir des résines durcissables qui dégazent peu lorsqu'elles sont soumises à des conditions de température et de pression similaires à celles qui règnent dans un environnement spatial de sorte que l'utilisation de ces résines puisse conduire à des matériaux composites satisfaisant à la norme ECSS-Q-70-02A de l'Agence Spatiale Européenne, relative au dégazage des matériaux à usage spatial.

Ils se sont aussi fixé pour but que ces résines durcissables présentent, avant durcissement, une viscosité telle qu'il soit possible de les utiliser pour imprégner des matériaux fibreux et que les matériaux ainsi imprégnés conservent, lorsqu'ils sont repliés sur eux-mêmes comme dans une structure Gossamer, une souplesse aussi longtemps que cette structure n'est pas amenée à se rigidifier dans l'espace.

### EXPOSÉ DE L'INVENTION

Ces buts et d'autres encore sont atteints par la présente invention qui se rapporte à l'utilisation d'une résine durcissable contenant un prépolymère qui comprend au moins un motif répétitif de formule (I) ci-après : 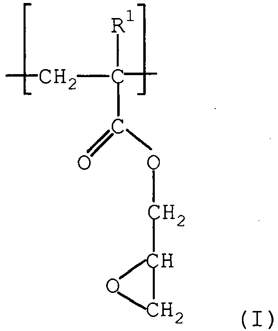 dans laquelle R¹ représente un atome d'hydrogène ou un groupe méthyle, pour la fabrication d'un matériau composite qui est destiné à se rigidifier dans l'espace, c'est-à-dire dans le vide spatial, par durcissement de la résine durcissable qu'il contient.

Ainsi, selon l'invention, on utilise une résine qui contient un prépolymère comprenant au moins un motif répétitif qui résulte de la polymérisation du méthacrylate ou de l'acrylate de glycidyle et qui comporte donc une fonction époxyde.

Dans ce qui précède et ce qui suit, on entend par « résine durcissable contenant un prépolymère », une résine durcissable qui peut aussi bien être une résine uniquement constituée de ce prépolymère (comme les résines décrites dans l'exemple 1) qu'une résine comprenant ce prépolymère en mélange avec d'autres constituants comme une résine formulée, contenant un ou plusieurs additifs du type amorceur latent de réticulation, accélérateur ou inhibiteur de réticulation, antioxydant, agent compatibilisant, charges, diluant réactif ou non réactif, etc.

Conformément à l'invention, le pourcentage molaire du motif répétitif de formule (I) dans le prépolymère est avantageusement de 20 à 100%, ce qui signifie que ce motif répétitif représente, en nombre de moles, au moins 20% du nombre total de moles constituant le prépolymère et peut représenter jusqu'à 100% de celui-ci.

Selon une disposition préférée de l'invention, le prépolymère comprend :
- au moins un premier motif répétitif de formule (I) ci-avant ; et
- au moins un deuxième motif répétitif de formule (II) ci-après : 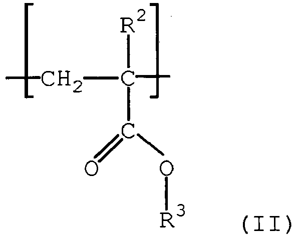
dans laquelle R² représente un atome d'hydrogène ou un groupe méthyle et R³ représente un groupe alkyle à chaîne droite ou ramifiée et ayant de 1 à 10 atomes de carbone.

Dans ce cas, le prépolymère comprend au moins deux motifs répétitifs dont l'un résulte de la polymérisation du méthacrylate ou de l'acrylate de glycidyle, tandis que l'autre résulte de la polymérisation d'un méthacrylate ou d'un acrylate d'un alkyle, linéaire ou ramifié, en C₁ à C₁₀ tel que, par exemple, un méthacrylate ou acrylate de méthyle, d'éthyle, de propyle (n-Pr ou i-Pr), de butyle (n-Bu, i-Bu, s-Bu ou t-Bu), de 2-éthylhexyle ou encore de décyle.

Conformément à l'invention, le premier motif répétitif résulte, de préférence, de la polymérisation du méthacrylate de glycidyle et répond, donc, à la formule particulière (Ia) ci-après : 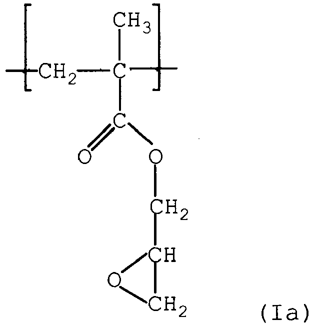 tandis que le deuxième motif répétitif résulte, lui, de préférence de la polymérisation de l'acrylate de n-butyle et répond, donc, à la formule particulière (IIa) ci-après :

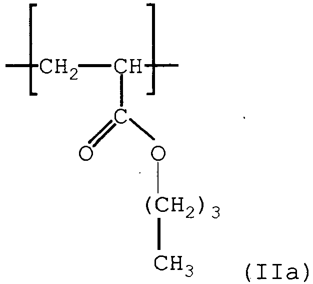

Selon une disposition particulièrement préférée de l'invention, le prépolymère est un copolymère, c'est-à-dire qu'il ne comprend que deux motifs répétitifs, l'un de formule (I) et l'autre de formule (II), auquel cas il est, de préférence, un poly(méthacrylate de glycidyle-co-acrylate de n-butyle).

Toutefois, ce prépolymère peut parfaitement comprendre un ou plusieurs motifs répétitifs additionnels du type (méth)acrylates ou non, porteurs de groupes époxydes ou non, comme :
- un motif résultant de la polymérisation d'un (méth)acrylate silylé de formule (III) ci-après : 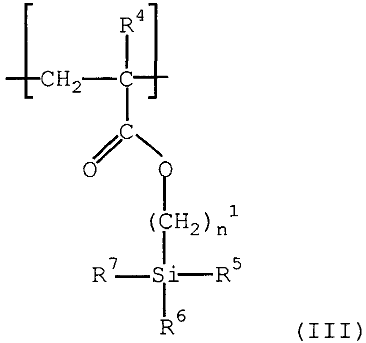 dans laquelle R⁴ représente un atome d'hydrogène ou un groupe méthyle, n¹ représente un nombre entier allant de 1 à 10, tandis que R⁵, R⁶ et R⁷, identiques ou différents, représentent un atome d'hydrogène ou un groupe alkyle à chaîne droite ou ramifiée et ayant de 1 à 10 atomes de carbone ; un tel motif est, par exemple, un motif résultant de la polymérisation du méthacrylate de 3-[tris(triméthylsiloxy)silyl]propyle ;
- un motif résultant de la polymérisation d'un (méth)acrylate d'aminoalkyle de formule (IV) ci-après : 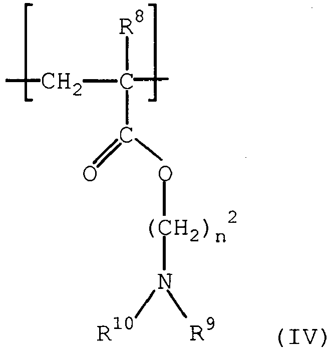 dans laquelle R⁸ représente un atome d'hydrogène ou un groupe méthyle, n² représente un nombre entier allant de 1 à 10, tandis que R⁹ et R¹⁰, identiques ou différents, représentent un groupe alkyle à chaîne droite ou ramifiée et ayant de 1 à 10 atomes de carbone ; un tel motif est, par exemple, un motif résultant de la polymérisation du méthacrylate de 2-diaminoéthyle ;
- un motif résultant de la polymérisation d'un (méth)acrylate fluoré de formule (V) ci-après : 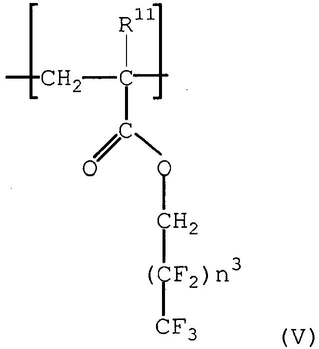 dans laquelle R¹¹ représente un atome d'hydrogène ou un groupe méthyle, tandis que n³ est un nombre entier allant de 0 à 10 ; un tel motif est, par exemple, un motif résultant de la polymérisation de l'acrylate de 2,2,2-trifluoroéthyle ;
   ou encore
- un (méth)acrylate porteur d'un groupe fonctionnel apte à jouer le rôle d'amorceur.

Quoi qu'il en soit, le pourcentage molaire du premier motif répétitif dans le prépolymère est, de préférence, de 40 à 70% et, mieux encore, de 45 à 65%, tandis que le pourcentage molaire du deuxième motif répétitif dans le prépolymère est, lui, de préférence de 30 à 60% et, mieux encore, de 35 à 55%.

Conformément à l'invention, le prépolymère est préférentiellement obtenu par polymérisation radicalaire en solution, auquel cas la polymérisation est avantageusement réalisée soit par voie thermique soit, mieux encore, par voie photochimique, cette deuxième voie s'étant, en effet, révélée être plus simple à mettre en oeuvre que la voie thermique tout en conduisant à des prépolymères qui présentent un très bon compromis entre les propriétés de dégazage et de viscosité recherchées.

La polymérisation par voie thermique peut, par exemple, être réalisée par un procédé dans lequel :
- on dissout le(s) monomère(s) et un amorceur thermique comme l'azobisisobutyronitrile ou le peroxyde de benzolyle, dans un solvant organique du type acétate d'éthyle ou acétate de butyle ;
- on chauffe le milieu réactionnel ainsi obtenu à une température allant 25 à 120°C, par exemple de 75°C, pendant une durée de 0,5 à 48 heures, par exemple de 24 heures ; puis
- on arrête la polymérisation et on isole le prépolymère résultant, par exemple par précipitation dans un solvant froid, par exemple un solvant alcoolique comme le méthanol ou hydroalcoolique comme un mélange méthanol/eau, ou par évaporation des autres constituants du milieu réactionnel (solvant, amorceur et monomère(s) restant(s)).

Quant à la polymérisation par voie photochimique, elle peut, elle, être réalisée par un procédé dans lequel :
- on dissout le(s) monomère(s) et un amorceur photosensible comme la 2-hydroxy-2-méthyl-propan-1-one ou l'hydroxyalkylphénone, dans un solvant organique du type acétate d'éthyle ou acétate de butyle ;
- on soumet le milieu réactionnel ainsi obtenu à un rayonnement lumineux de longueur(s) d'onde se situant dans la gamme de photosensibilité de l'amorceur, pendant une durée de 10 minutes à 6 heures, par exemple de 1 à 2 heures ; puis
- on arrête la polymérisation et on isole le prépolymère résultant, par exemple par précipitation dans un solvant froid, par exemple un solvant alcoolique comme le méthanol ou hydroalcoolique comme un mélange méthanol/eau, ou par évaporation des autres constituants du milieu réactionnel (solvant, amorceur et monomère(s) restant(s)).

Dans le cas où l'on souhaite obtenir un prépolymère peu visqueux, la polymérisation radicalaire est avantageusement réalisée en présence d'un agent de transfert de chaîne dont la présence dans le milieu réactionnel permet d'obtenir des prépolymères qui présentent une viscosité inférieure à celle de prépolymères préparés selon le même protocole opératoire mais sans utiliser d'agent de transfert de chaîne.

Dans ce cas, on préfère que cet agent de transfert de chaîne soit un agent multifonctionnel du type polythiol et, plus spécialement, un tétrathiol tel que le tétrakis(2-mercaptoacétate) de pentaérythritol, le tétrakis(thioglycolate) de pentaérythritol ou le tétrakis(3-mercaptopropionate) de pentaérythritol, dont l'utilisation conduit à des prépolymères qui allient une faible viscosité à une faible tendance au dégazage.

Ceci est vraisemblablement lié au fait que ces prépolymères présentent une structure en étoile, c'est-à-dire une structure composée d'un motif central de formule (VI) ci-après : 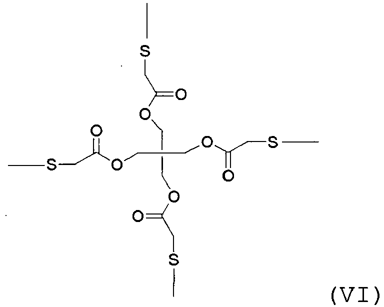 sur lequel sont greffées quatre chaînes linéaires formées par la répétition d'au moins un motif répétitif de formule (I) et, mieux encore, par la répétition aléatoire d'au moins un motif répétitif de formule (I) et d'au moins un motif répétitif de formule (II).

Ce qui donne, par exemple, dans le cas d'un poly(méthacrylate de glycidyle-co-acrylate de n-butyle), la structure de formule (VII) ci-après : 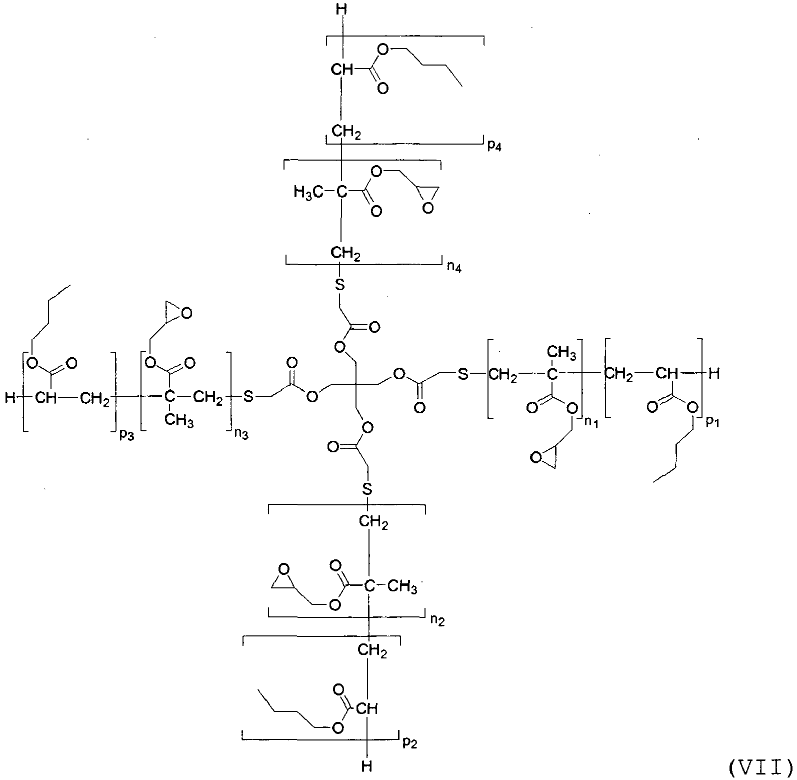 dans laquelle n₁, n₂, n₃ et n₄, identiques ou différents, représentent le nombre de fois où le motif de formule (Ia) est répété (de façon aléatoire), tandis que p₁, p₂, p₃ et p₄, identiques ou différents, représentent le nombre de fois où le motif répétitif de formule (IIa) est répété (de façon aléatoire).

Conformément à l'invention, le matériau composite peut être obtenu en imprégnant un matériau fibreux par la résine durcissable ou par un mélange comprenant cette résine et un ou plusieurs additifs du type amorceur latent de réticulation, accélérateur ou inhibiteur de réticulation, antioxydant, agent compatibilisant, charges, diluant réactif ou non réactif, etc, si ladite résine ne contient pas déjà de tels additifs.

Cette imprégnation peut être réalisée par toutes les techniques de fabrication de préimprégnés connues de l'homme du métier (voir, par exemple, l'ouvrage « TECHNIQUES DE L'INGENIEUR », Plastiques et Composites, volume AM5). Elle peut également être réalisée par injection de ladite résine ou dudit mélange dans le matériau fibreux, par exemple par la technique connue sous le sigle « RTM » (pour « Resin Transfert Molding »).

Le matériau fibreux peut être de différents types. Ainsi, il peut s'agir d'un matériau constitué de fibres de verre, de fibres de quartz, de fibres de carbone, de fibres de graphite, de fibres de silice, de fibres métalliques comme des fibres d'acier, des fibres d'aluminium ou des fibres de bore, de fibres organiques comme les fibres d'aramide, les fibres de polyéthylène, les fibres de polyester ou les fibres de poly(p-phénylène benzobisoxazole), plus connues sous le sigle PBO, ou encore de fibres de carbure de silicium.

Il peut se présenter, selon la nature des fibres qui le constituent, sous la forme de fils coupés, de fibres broyées, de mats à filaments continus, de mats à filaments coupés, de stratifils (ou « rovings » en langue anglaise), de tissus, de tricots, de feutres, ..., ou encore sous la forme de complexes réalisés par association de différents types de matériaux plans.

Selon une disposition particulièrement préférée de l'invention, le matériau composite est un matériau composite d'une structure à déploiement et rigidification dans l'espace et, en particulier, d'une structure Gossamer ou d'une structure en treillis du type de celles décrites dans la référence **[1]** précitée.

L'invention a aussi pour objet un prépolymère qui présente une structure composée d'un motif central de formule (VI) telle que précédemment définie, sur lequel sont greffées quatre chaînes linéaires formées par la répétition d'au moins un motif répétitif de formule (I) telle que précédemment définie.

Selon une disposition préférée de l'invention, ce prépolymère comprend une structure composée d'un motif central de formule (VI), sur lequel sont greffées quatre chaînes linéaires formées par la répétition aléatoire d'au moins un motif répétitif de formule (I) et d'au moins un motif de formule (II) telle que précédemment définie.

Mieux encore, dans ce prépolymère, le motif répétitif de formule (I) répond à la formule particulière (Ia) telle que précédemment définie, tandis que le motif répétitif de formule (II) répond à la formule particulière (IIa) telle que précédemment définie.

L'invention a encore pour objet une structure à déploiement et rigidification dans l'espace, c'est-à-dire dans le vide spatial, qui comprend un matériau fibreux imprégné d'une résine durcissable telle que précédemment définie ou d'un mélange comprenant cette résine et un ou plusieurs additifs du type amorceur latent de réticulation, accélérateur ou inhibiteur de réticulation, antioxydant, agent compatibilisant, charges, diluant réactif ou non réactif, etc, si ladite résine ne contient pas déjà de tels additifs.

Là également, le matériau fibreux est de préférence choisi dans le groupe constitué par les fibres de verre, les fibres de quartz, les fibres de carbone, les fibres de graphite, les fibres métalliques, les fibres de poly(p-phénylène benzobisoxazole), les fibres d'aramide, les fibres de polyéthylène, les fibres de bore, les fibres de carbure de silicium et leurs mélanges.

D'autres caractéristiques et avantages de l'invention apparaîtront du complément de description qui suit et qui se rapporte à des exemples de préparation de résines utiles selon l'invention et à des exemples ayant permis de valider l'utilisation de ces résines pour la fabrication de matériaux composites destinés à se rigidifier dans le vide spatial.

Bien entendu, ce complément de description n'est donné qu'à titre d'illustration de l'invention et n'en constitue en aucun cas une limitation.

### EXPOSE DE MODES DE REALISATION PARTICULIERS

### EXEMPLE 1 : Préparation et caractéristiques de résines utiles selon l'invention :

On prépare des résines constituées chacune d'un prépolymère poly(méthacrylate de glycidyle-*co-*acrylate de n-butyle) par polymérisation radicalaire en solution, par voie thermique d'une part, et par voie photochimique d'autre part, de méthacrylate de glycidyle et d'acrylate de n-butyle.

Les résines obtenues par voie thermique sont désignées ci-après T1 à T11 tandis que celles obtenues par voie photochimique sont désignées ci-après P1 à P5.

### 1. Polymérisation par voie thermique :

Elle est réalisée sous atmosphère d'argon, en utilisant l'azobisisobutyronitrile (ou AIBN, disponible chez Sigma-Aldrich) comme amorceur thermique et, pour certaines résines, un agent de transfert de chaîne qui est soit le tétrabromure de carbone (ou CBr₄, disponible chez Sigma-Aldrich) soit le tétrakis(2-mercaptoacétate) de pentaérythritol (ou PETMA, disponible chez Sigma-Aldrich).

Le protocole opératoire est le suivant : dans un bicol de 250 mL, on dissout le méthacrylate de glycidyle (ou GMA, disponible chez Sigma-Aldrich), l'AIBN et, le cas échéant, l'agent de transfert de chaîne dans de l'acétate d'éthyle, puis on ajoute l'acrylate de butyle (ou BA, disponible chez Sigma-Aldrich) et le milieu réactionnel est placé sous bullage à l'argon pendant 30 minutes. Le milieu réactionnel est ensuite placé dans un bain d'huile à 75°C pendant 24 heures sous agitation magnétique. A l'issue de quoi, il est transvasé dans une ampoule puis versé goutte à goutte dans un solvant froid. Le précipité est recueilli puis séché sous vide dans un dessiccateur.

Pour toutes les résines, les deux monomères (GMA et BA) et l'acétate d'éthyle sont utilisés dans des proportions telles que ces monomères soient à 20% en masse dans ce solvant et que le pourcentage molaire de GMA introduit dans le milieu réactionnel (et qui correspond au rapport entre le nombre de moles de GMA introduites dans le milieu réactionnel et le nombre total de moles de monomères introduites dans le milieu réactionnel, multiplié par 100) soit de 43%.

Par contre, on fait varier la proportion de l'AIBN, la nature et la température du solvant utilisé pour la précipitation ainsi que la nature de l'agent de transfert et la proportion lorsque celui-ci est présent.

Ces variations sont présentées dans le tableau I ci-après.

**TABLEAU I**

| **Résine** | **% massique* d'AIBN** | **Agent de transfert (% massique**)** | **Solvant de précipitation (T)** |
|---|---|---|---|
| T1 | 0,45% | --- | MeOH |
| | | | (5°C) |
| T2 | 1% | --- | MeOH |
| | | | (5°C) |
| T3 | 9% | --- | MeOH |
| | | | (5°C) |
| T4 | 6% | --- | MeOH |
| | | | (5°C) |
| T5 | 1% | CBr₄ | MeOH |
| | | (3,2%) | (-10°C) |
| T6 | 1% | CBr₄ | MeOH |
| | | (2,4%) | (-10°C) |
| T7 | 1% | CBr₄ | MeOH/H₂O 95/5 |
| | | (2,4%) | (-10°C) |
| T8 | 1% | CBr₄ | MeOH/H₂O 90/10 |
| | | (2,4%) | (-10°C) |
| T9 | 1% | CBr₄ | MeOH/H₂O 90/10 |
| | | (3,2%) | (-10°C) |
| T10 | 1% | CBr₄ | MeOH/H₂O 80/20 |
| | | (2,4%) | (-10°C) |
| T11 | 1% | PETMA | MeOH |
| | | (1%) | (5°C) |

| | | | |
|---|---|---|---|
| * masse d'AIBN rapportée à la masse totale du milieu réactionnel ; ** masse de l'agent de transfert rapportée à la masse totale du milieu réactionnel | | | |

### 2. Polymérisation par voie photochimique :

Elle est réalisée en utilisant la 2-hydroxy-2-méthyl-1-phényl-propan-1-one (ou HMPP, disponible chez Ciba Specialty Chemicals sous la référence commerciale Darocur^{®} 1173) comme amorceur photosensible et, pour certaines résines, un agent de transfert de chaîne qui est soit le 1-dodécanethiol (ou DDT, disponible chez Sigma-Aldrich) soit le PETMA.

Le protocole opératoire est le suivant : dans un bicol de 250 mL, on dissout le méthacrylate de glycidyle, la HMPP et, le cas échéant, l'agent de transfert de chaîne dans de l'acétate d'éthyle, puis on ajoute l'acrylate de butyle que l'on fait préalablement buller sous argon. Le milieu réactionnel est placé dans des tubes en verre scellés, à raison de 9 mL de milieu réactionnel par tube. Les tubes sont placés dans un réacteur photochimique Rayonet RPR-100 de Southern England Ultra Violet Company et irradiés à la longueur d'onde de 350 nm. Après irradiation, le solvant est évaporé à l'aide d'un rotavap tandis que la HMPP, les monomères restants et, le cas échéant, l'agent de transfert de chaîne restant sont évaporés avec une pompe à palette (10⁻² mbar), à une température de l'ordre de 90°C.

Pour toutes les résines, les deux monomères (GMA et BA) et l'acétate d'éthyle sont utilisés dans des proportions telles que ces monomères soient à 5 à 50% et, typiquement à 20%, en masse dans ce solvant et que le pourcentage molaire de GMA introduit dans le milieu réactionnel soit de 43%.

Par contre, on fait varier la proportion de l'HMPP, la durée de l'irradiation ainsi que la nature et la proportion de l'agent de transfert lorsque celui-ci est présent.

Ces variations sont présentées dans le tableau II ci-après.

**TABLEAU II**

| **Résine** | **% massique d' HMPP** | **Agent de transfert (% massique**)** | **Durée de l'irradiation** |
|---|---|---|---|
| P1 | 1% | --- | 2 heures |
| P2 | 1% | --- | 2 heures |
| P3 | 1% | --- | 2 heures |
| P4 | 0,5% | DDT | 1 heure |
| | | (2%) | |
| P5 | 0,5% | PETMA | 1 heure |
| | | (4,28%) | |

| | | | |
|---|---|---|---|
| * masse d'HMPP rapportée à la masse totale du milieu réactionnel ; ** masse de l'agent de transfert rapportée à la masse totale du milieu réactionnel | | | |

### 3. Caractéristiques des résines obtenues :

Les résines obtenues ci-avant ont été soumises à des analyses pour déterminer le pourcentage molaire de GMA présent dans les prépolymères qui les constituent, leur viscosité à température ambiante sauf lorsque les résines se sont révélées être solides ou trop visqueuses à cette température pour que leur viscosité puisse être mesurée à cette température), leur viscosité à 60°C et leur tendance au dégazage.

Les pourcentages molaires du GMA ont été déterminés par spectrométrie RMN ¹H (spectromètre Bruker 250 MHz) dans du chloroforme deutérié et en utilisant le tétraméthylsilane comme standard interne.

Les viscosités ont été déterminées au moyen d'un viscosimètre à rotation (viscosimètre AR 2000.ex de TA Instruments) permettant de mesurer simultanément le gradient de vitesse de cisaillement et la contrainte ou tension de cisaillement. On a appliqué aux résines un gradient de température de 20 à 100°C à raison de 5°C/minute et un gradient de vitesse de cisaillement de 1 par seconde. Les viscosités ont été calculées à l'aide de l'équation suivante η = τ/D dans laquelle η est la viscosité en Pa.s, τ est la tension de cisaillement en Pa et D est le gradient de vitesse de cisaillement en s⁻¹.

Quant à la tendance au dégazage, elle a été déterminée par un essai de dégazage mis au point par Astrium Space Transportation.

Cet essai, qui est plus simple à mettre en oeuvre que celui de la norme ECSS-Q-70-02A mais qui est aussi plus sévère que lui, consiste, dans un premier temps, à conditionner les échantillons dont on veut tester la tendance au dégazage en les laissant pendant 6 heures (t₀ → t₆) à la température de 23°C et sous un vide de 2 hPa, puis à soumettre ces échantillons à une analyse thermogravimétrique en leur appliquant, d'une part, une montée en température de 0,2°C par minute jusqu'à atteindre 150°C (t₆ → t₋₁₂) et, d'autre part, une pression de 2 Pa.

On détermine ainsi un taux de dégazage qui correspond à la perte totale de masse subie par les échantillons au cours de l'analyse thermogravimétrique, c'est-à-dire entre t₆ et t₋₁₂, exprimée en pourcentage de la masse présentée par ces échantillons à t₆.

Les résultats des différentes analyses sont présentés dans le tableau III ci-après.

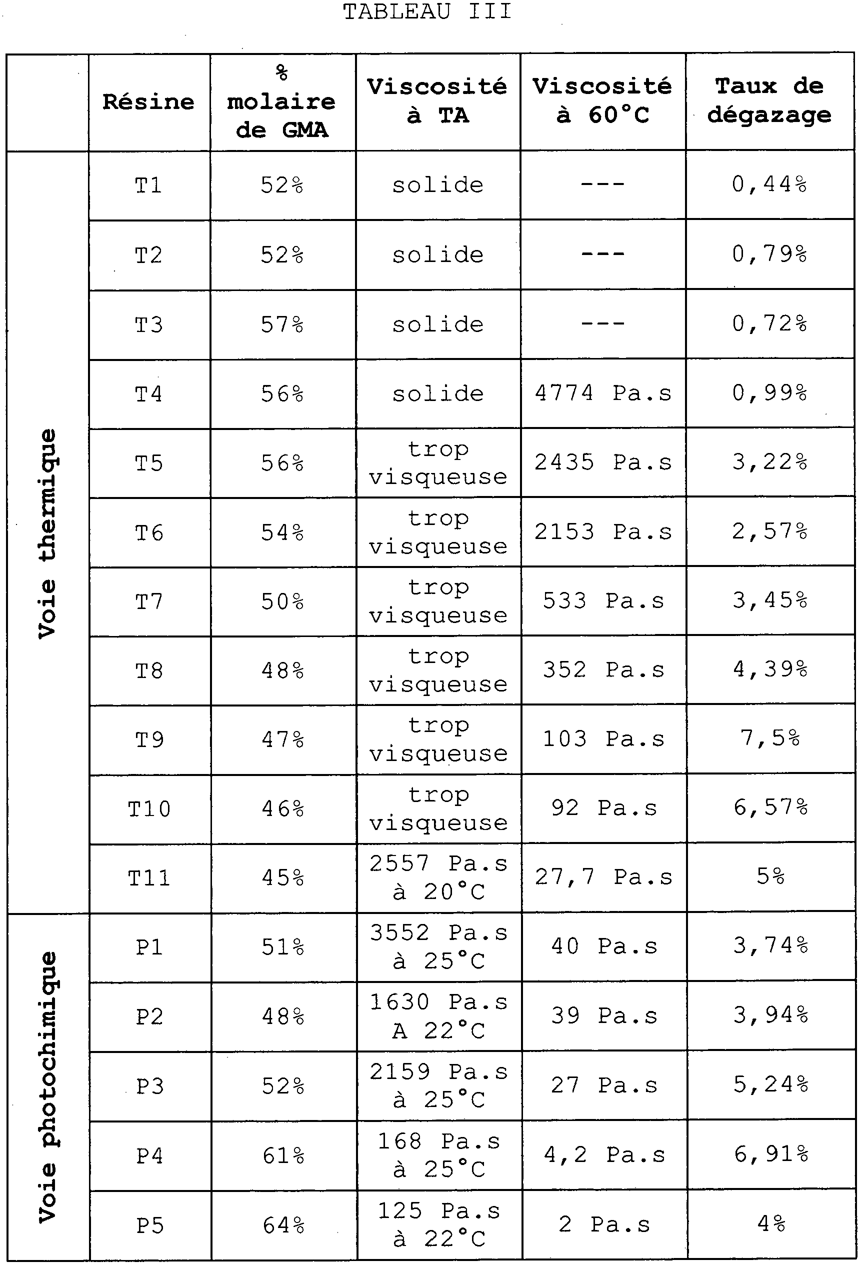

Ces résultats montrent que les résines obtenues par voie thermique sont celles qui ont les taux de dégazage les plus faibles mais sont aussi celles qui présentent la viscosité la plus élevée.

Ils montrent par ailleurs que l'on peut abaisser la viscosité d'une résine obtenue par un mode opératoire donné en ajoutant au milieu réactionnel un agent de transfert de chaîne mono- ou multifonctionnel et ce, aussi bien dans le cas où la polymérisation radicalaire est effectuée par voie thermique que dans celui où elle est effectuée par voie photochimique.

Ils montrent également que l'utilisation d'un agent de transfert de chaîne multifonctionnel et, en particulier, d'un tétrathiol comme le PETMA, qui permet d'obtenir des prépolymères présentant une structure en étoile, conduit à des résines qui présentent à la fois un très faible taux de dégazage et une très faible viscosité.

Ils montrent encore qu'il est possible d'ajuster les propriétés de dégazage et de viscosité des résines en fonction de l'usage auquel elles sont destinées en jouant sur les conditions dans lesquelles elles sont préparées (nature et proportion de l'amorceur, nature du solvant de dissolution des monomères, température de polymérisation dans le cas d'une polymérisation par voie thermique, spectre du rayonnement lumineux et durée de l'irradiation dans le cas d'une polymérisation par voie photochimique, présence ou non d'un agent de transfert de chaîne, etc).

A cet égard, il est à noter que, dans le domaine de la fabrication de matériaux composites destinés à se rigidifier dans l'espace, on ne cherche pas systématiquement à utiliser des résines durcissables à très faible viscosité. Ainsi, s'il est effectivement souhaitable de disposer de résines très faiblement visqueuses comme la résine P5 pour fabriquer des structures à cordes du type de celles décrites dans la référence **[1]** précitée, la fabrication de préimprégnés pour des structures Gossamer nécessite, elle, d'utiliser des résines à viscosité plus élevée comme les résines P1 et P2 pour que ces préimprégnés aient une pégosité suffisante pour coller sur eux-mêmes ainsi que sur les films destinés à les protéger.

### EXEMPLE 2 : Validation de l'utilisation des résines utiles selon l'invention pour la fabrication de matériaux composites à usage spatial

### 1. Fabrication d'une structure en treillis :

On mélange la résine P5 préparée dans l'exemple 1 ci-avant avec de l'hexafluoroantimonate de N-benzylpyrazinium qui est un amorceur thermique capable d'induire la réticulation et, donc, le durcissement des résines époxydes par voie cationique sous l'effet d'une augmentation de la température. Les proportions utilisées sont de 4 parts d'amorceur pour 100 parts de résine et le mélange est effectué à 75°C. Une fois le mélange effectué, on le laisse reposer 5 minutes à 75°C pour laisser les bulles d'air s'échapper.

Puis on imprègne les cordes d'une structure telle que décrite dans la référence **[1]** précitée avec le mélange résine P5/amorceur ainsi obtenu.

Ces cordes sont composées de quatre brins qui sont formés chacun d'un ensemble de fibres de poly(p-phénylène benzobisoxazole) (ou PBO) au centre duquel circule une fibre de carbone et qui sont réunis dans une gaine en polytétrafluoroéthylène.

L'imprégnation des cordes par le mélange résine P5/amorceur est réalisée en injectant directement ce mélange, préalablement chauffé à 78°C, dans ces cordes en appliquant une pression de 6 bars au point d'injection. La durée de l'injection est de 2 à 3 heures pour une corde de 2 m de long et le taux d'imprégnation de 44% (v/v).

Puis, on soumet des échantillons des cordes ainsi imprégnées à un essai de dégazage que l'on réalise conformément à la norme ECSS-Q-70-02A.

On rappelle que l'essai de dégazage de cette norme consiste :
- à conditionner les échantillons du matériau dont on veut tester la tendance au dégazage en laissant ces échantillons pendant 24 heures (t₀ → t₂₄) à une température de (22 ± 3)°C et à une humidité relative de (55 ± 10)% ;
- à soumettre ces échantillons à une analyse thermogravimétrique que l'on réalise pendant 24 heures (t₂₄ → t₄₈), à une température de 125°C et sous un vide d'au moins 10⁻³ Pa ; puis
- à conditionner de nouveau les échantillons en les laissant pendant 24 heures (t₄₈ → t₇₂) à une température de (22 ± 3) °C et à une humidité relative de (55 ± 10)%.

Les trois critères suivants sont utilisés :
- la TML, qui correspond à la perte de masse totale présentée par les échantillons au cours de l'analyse thermogravimétrique, c'est-à-dire entre t₂₄ et t₄₈, et qui est exprimée en pourcentage de la masse des échantillons à t₂₄ ;
- la RML, qui correspond à la perte totale de masse présentée par les échantillons hors reprise hydrique des échantillons, c'est-à-dire hors la masse de vapeur d'eau réabsorbée par les échantillons entre t₄₈ et t₇₂, et qui est exprimée en pourcentage de la masse des échantillons à t₂₄ ; et
- la CVCM, qui correspond à la quantité de matière libérée par le dégazage des échantillons au cours de l'analyse thermogravimétrique et se condensant sur un collecteur, et qui, elle également, est exprimée en pourcentage de la masse des échantillons à t₂₄.

Un matériau est considéré comme satisfaisant à la norme ECSS-Q-70-02A lorsqu'il présente une TML inférieure à 1,0%, une RML inférieure à 1,0% et une CVCM inférieure à 0,10%.

En l'espèce, les échantillons de cordes imprégnées du mélange résine P5/amorceur passent avec succès cet essai puisqu'ils présentent en moyenne une TML de 0,83%, une RML de 0,65% et une CVCM de 0,05%.

### 2. Fabrication d'un préimprégné pour une structure Gossamer :

On mélange 70 g de la résine P2 préparée dans l'exemple 1 ci-avant avec 7 g d'hexafluoro-phosphate du complexe fer-cyclopentadiényl 1-méthylnaphtalène qui est un amorceur photochimique capable d'induire la réticulation et, donc, le durcissement des résines époxydes par voie cationique sous l'effet d'un rayonnement lumineux. Ce mélange est effectué à 80-85°C.

Puis on imprègne un taffetas de verre E de 130 g/m² (Porcher Industries) avec le mélange résine P2/amorceur ainsi obtenu. L'imprégnation est réalisée en étuve, à 70°C, par une technique classique d'imprégnation sous vide. Le taux d'imprégnation est de 31%.

Puis, on soumet des échantillons du taffetas de verre ainsi imprégné à un essai de dégazage que l'on réalise conformément à la norme ECSS-Q-70-02A.

Là également, ces échantillons passent avec succès cet essai puisqu'ils présentent en moyenne une TML de 0,60%, une RML de 0,45% et une CVCM de 0,06%.

### REFERENCES CITEES

**[1]** FR-A-2 887 523
**[2]** D. P. Cadogan et S.E. Scaborough, 2001, American Institute of Aeronautics and Astronautics, AIAA Gossamer Spacecraft Forum, 16-19 avril 2001, Seattle, WA
**[3]** WO-A-2006/024805

## Revendications

1. Utilisation d'une résine durcissable contenant un prépolymère comprenant au moins un motif répétitif de formule (I) ci-après : 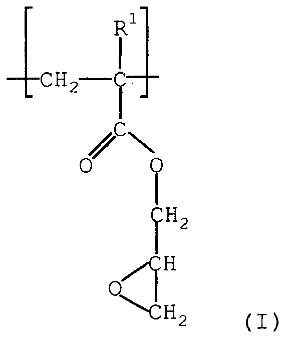 dans laquelle R¹ représente un atome d'hydrogène ou un groupe méthyle, pour la fabrication d'un matériau composite qui est destiné à se rigidifier dans le vide spatial par durcissement de la résine durcissable qu'il contient.

2. Utilisation selon la revendication 1, dans laquelle le pourcentage molaire du motif répétitif de formule (I) dans le prépolymère est de 20 à 100%.

3. Utilisation selon la revendication 1, dans laquelle le prépolymère comprend :
- au moins un motif répétitif de formule (I) ; et
- au moins un motif répétitif de formule (II) ci-après : 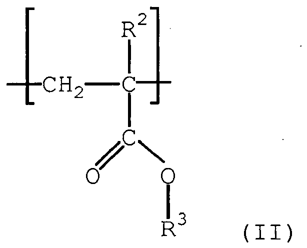 dans laquelle R² représente un atome d'hydrogène ou un groupe méthyle et R³ représente un groupe alkyle à chaîne droite ou ramifiée et ayant de 1 à 10 atomes de carbone.

4. Utilisation selon l'une quelconque des revendications 1 à 3, dans laquelle le motif répétitif de formule (I) répond à la formule particulière (Ia) ci-après :

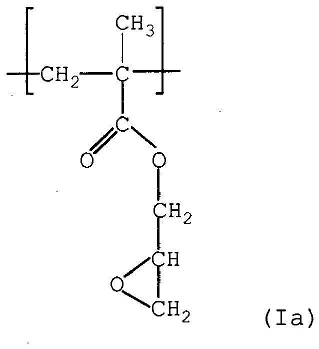

5. Utilisation selon la revendication 3, dans laquelle le motif répétitif de formule (II) répond à la formule particulière (IIa) ci-après :

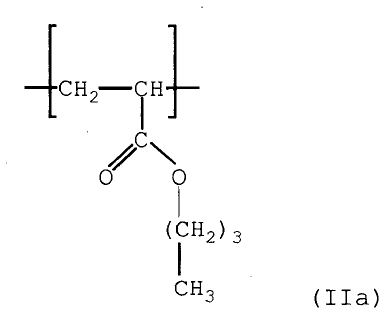

6. Utilisation selon l'une quelconque des revendications 3 à 5, dans laquelle le prépolymère est un poly(méthacrylate de glycidyle-co-acrylate de butyle).

7. Utilisation selon l'une quelconque des revendications 3 à 6, dans laquelle le pourcentage molaire du motif répétitif de formule (I) dans le prépolymère est de 40 à 70% tandis que le pourcentage molaire du motif répétitif de formule (II) dans le prépolymère est de 30 à 60%.

8. Utilisation selon la revendication 7, dans laquelle le pourcentage molaire du motif répétitif de formule (I) dans le prépolymère est de 45 à 65% tandis que le pourcentage molaire du motif répétitif de formule (II) dans le prépolymère est de 35 à 55%.

9. Utilisation selon l'une quelconque des revendications précédentes, dans laquelle le prépolymère a été obtenu par polymérisation radicalaire en solution d'au moins un monomère constitué par un (méth)acrylate de glycidyle.

10. Utilisation selon l'une quelconque des revendications 3 à 8, dans laquelle le prépolymère a été obtenu par polymérisation radicalaire en solution d'au moins un premier monomère constitué par un (méth)acrylate de glycidyle et d'au moins un deuxième monomère constitué par un (méth)acrylate d'un alkyle à chaîne linéaire ou ramifié et ayant de 1 à 10 atomes de carbone.

11. Utilisation selon la revendication 9 ou la revendication 10, dans laquelle la polymérisation radicalaire a été réalisée par voie thermique ou par voie photochimique.

12. Utilisation selon l'une quelconque des revendications précédentes, dans laquelle le prépolymère présente une structure composée d'un motif central de formule (VI) ci-après : 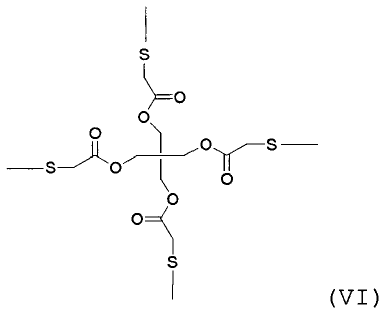 sur lequel sont greffées quatre chaînes linéaires formées par la répétition d'au moins un motif répétitif de formule (I).

13. Utilisation selon l'une quelconque des revendications 3 à 11, dans laquelle le prépolymère présente une structure composée d'un motif central de formule (VI) ci-après : 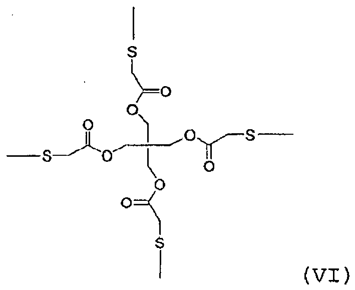 sur lequel sont greffées quatre chaînes linéaires formées par la répétition aléatoire d'au moins un motif répétitif de formule (I) et d'au moins un motif répétitif de formule (II).

14. Utilisation selon l'une quelconque des revendications précédentes, dans laquelle le matériau composite est fabriqué en imprégnant un matériau fibreux par la résine durcissable ou par un mélange comprenant cette résine et un ou plusieurs additifs du type amorceur latent de réticulation, accélérateur ou inhibiteur de réticulation, antioxydant, agent compatibilisant, charges, diluant réactif ou non réactif.

15. Utilisation selon la revendication 14, dans laquelle le matériau fibreux est choisi dans le groupe constitué par les fibres de verre, les fibres de quartz, les fibres de carbone, les fibres de graphite, les fibres de silice, les fibres métalliques, les fibres de poly(p-phénylène benzobisoxazole), les fibres d'aramide, les fibres de polyéthylène, les fibres de polyester, les fibres de carbure de silicium et leurs mélanges.

16. Utilisation selon l'une quelconque des revendications précédentes, dans laquelle le matériau composite est un matériau composite d'une structure à déploiement et rigidification dans l'espace.

17. Prépolymère qui présente une structure composée d'un motif central de formule (VI) ci-après : 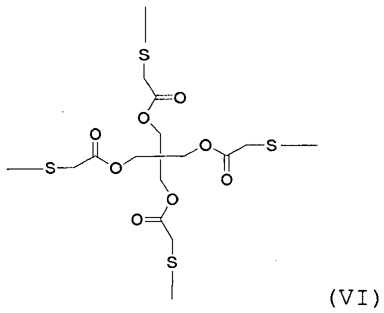 sur lequel sont greffées quatre chaînes linéaires formées par la répétition d'au moins un motif répétitif de formule (I) ci-après : 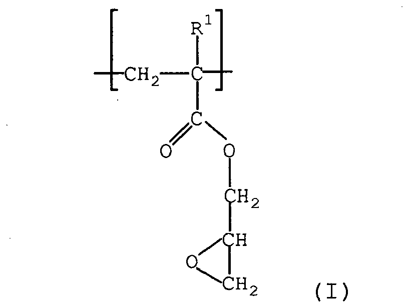 dans laquelle R¹ représente un atome d'hydrogène ou un groupe méthyle.

18. Prépolymère selon la revendication 17, qui comprend une structure composée d'un motif central de formule (VI), sur lequel sont greffées quatre chaînes linéaires formées par la répétition aléatoire d'au moins un motif répétitif de formule (I) et d'au moins un motif de formule (II) ci-après : 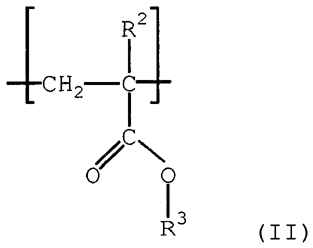 dans laquelle R² représente un atome d'hydrogène ou un groupe méthyle et R³ représente un groupe alkyle à chaîne droite ou ramifiée et ayant de 1 à 10 atomes de carbone.

19. Prépolymère selon la revendication 17 ou la revendication 18, dans lequel le motif répétitif de formule (I) répond à la formule particulière (Ia) ci-après :

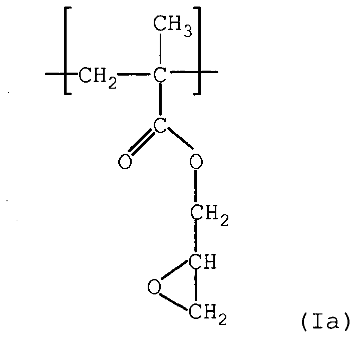

20. Prépolymère selon la revendication 18, dans lequel le motif répétitif de formule (II) répond à la formule particulière (IIa) ci-après :

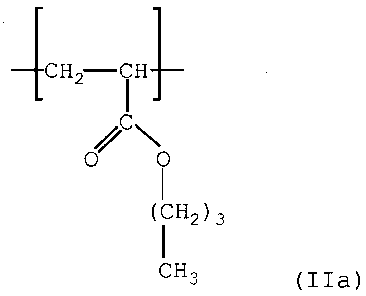

21. Structure à déploiement et rigidification dans le vide spatial, qui comprend un matériau composite comprenant un matériau fibreux imprégné d'une résine durcissable telle que définie dans l'une quelconque des revendications 1 à 13 ou d'un mélange comprenant cette résine et un ou plusieurs additifs.

22. Structure selon la revendication 21, dans laquelle le matériau fibreux est choisi dans le groupe constitué par les fibres de verre, les fibres de quartz, les fibres de carbone, les fibres de graphite, les fibres de silice, les fibres métalliques, les fibres de poly(p-phénylène benzobisoxazole), les fibres d'aramide, les fibres de polyéthylène, les fibres de polyester, les fibres de carbure de silicium et leurs mélanges.

## Patentansprüche

1. Verwendung eines härtbaren Harzes, das ein Präpolymer enthält, umfassend wenigstens eine sich wiederholende Einheit der nachfolgenden Formel (I): 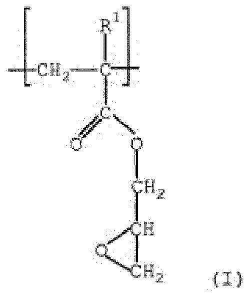 wobei R¹ ein Wasserstoffatom oder eine Methylgruppe repräsentiert, zur Herstellung eines Verbundmaterials, das dazu ausgelegt ist, im Weltraumvakuum durch Härten des härtbaren Harzes, das es enthält, starr zu werden.

2. Verwendung nach Anspruch 1, bei der der Molprozentanteil der sich wiederholenden Einheit der Formel (I) in dem Präpolymer von 20 bis 100 % ist.

3. Verwendung nach Anspruch 1, bei der das Präpolymer umfasst:
- wenigstens eine sich wiederholende Einheit der Formel (I); und
- wenigstens eine sich wiederholende Einheit der nachfolgenden Formel (II): 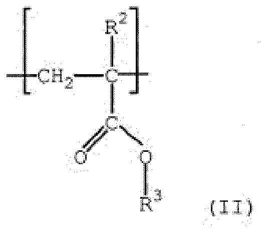 wobei R² ein Wasserstoffatom oder eine Methylgruppe repräsentiert, und wobei *R*³ eine Alkylgruppe mit gerader oder verzweigter Kette repräsentiert, die 1 - 10 Kohlenstoffatome hat.

4. Verwendung nach einem der Ansprüche 1 bis 3, bei der die sich wiederholende Einheit der Formel (I) der nachfolgenden speziellen Formel (Ia) genügt:

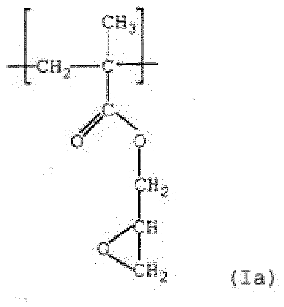

5. Verwendung nach Anspruch 3, bei der die sich wiederholende Einheit der Formel (II) der nachfolgenden speziellen Formel (IIa) genügt:

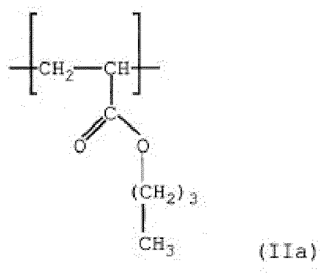

6. Verwendung nach einem der Ansprüche 3 bis 5, wobei das Präpolymer ein Poly(methacrylat von Glycidyl-co-acrylat von Butyl) ist.

7. Verwendung nach einem der Ansprüche 3 bis 6, bei der der Molprozentanteil der sich wiederholenden Einheit der Formel (I) in dem Präpolymer von 40 bis 70 % ist, wohingegen der Molprozentanteil der sich wiederholenden Einheit der Formel (II) in dem Präpolymer von 30 bis 60 % ist.

8. Verwendung nach Anspruch 7, bei der der Molprozentanteil der sich wiederholenden Einheit der Formel (I) in dem Präpolymer von 45 bis 65 % ist, wohingegen der Molprozentanteil der sich wiederholenden Einheit der Formel (II) in dem Präpolymer von 35 bis 55 % ist.

9. Verwendung nach einem der vorhergehenden Ansprüche, bei der das Präpolymer erhalten wurde durch radikalische Polymerisation in Lösung von wenigstens einem Monomer, gebildet durch ein (Meth)acrylat von Glycidyl.

10. Verwendung nach einem der Ansprüche 3 bis 8, bei der das Präpolymer erhalten wurde durch radikalische Polymerisation in Lösung von wenigstens einem ersten Monomer, gebildet durch ein (Meth)acrylat von Glycidyl, und von wenigstens einem zweiten Monomer, gebildet durch ein (Meth)acrylat eines Alkyls mit gerader oder verzweigter Kette, das von 1 bis 10 Kohlenstoffatome hat.

11. Verwendung nach Anspruch 9 oder Anspruch 10, bei der die radikalische Polymerisation auf thermischem Wege oder auf photochemischem Wege durchgeführt worden ist.

12. Verwendung nach einem der vorhergehenden Ansprüche, bei der das Präpolymer eine Struktur aufweist, die durch eine zentrale Einheit der nachfolgenden Formel (VI) gebildet ist: 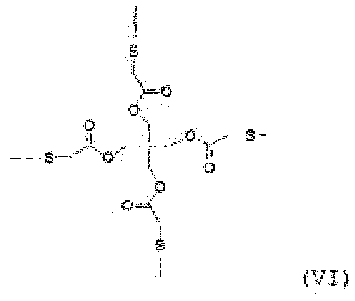 an die vier lineare Ketten gepfropft sind, gebildet durch die Wiederholung wenigstens einer sich wiederholenden Einheit der Formel (I).

13. Verwendung nach einem der Ansprüche 3 bis 11, bei der das Präpolymer eine Struktur aufweist, die durch eine zentrale Einheit der nachfolgenden Formel (VI) gebildet ist: 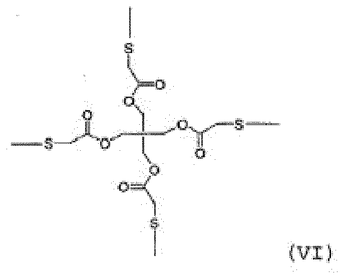 an die vier lineare Ketten gepfropft sind, gebildet durch die zufällige Wiederholung wenigstens einer sich wiederholenden Einheit der Formel (I) und wenigstens einer sich wiederholenden Einheit der Formel (II).

14. Verwendung nach einem der vorhergehenden Ansprüche, bei der das Verbundmaterial hergestellt wird durch Imprägnieren eines Fasermaterials mit dem härtbaren Harz oder mit einer Mischung, die dieses Harz enthält sowie einen oder mehrere Zusatzstoffe vom Typ latenter Aktivator für eine Vernetzung, Vernetzungsbeschleuniger oder -verhinderer, Antioxidans, Kompatibilisierungsagens, Ladungen, reaktiver oder nicht reaktiver Verdünner.

15. Verwendung nach Anspruch 14, bei der das Fasermaterial ausgewählt ist aus der Gruppe gebildet durch Glasfasern, Quarzfasern, Kohlenstofffasern, Graphitfasern, Siliziumdioxidfasern, Metallfasern, Fasern von Poly(p-phenylen-benzobisoxazol), Aramidfasern, Polyethylenfasern, Polyesterfasern, Siliziumcarbidfasern und ihren Mischungen.

16. Verwendung nach einem der vorhergehenden Ansprüche, bei der das Verbundmaterial ein Verbundmaterial mit einer Struktur zur Entfaltung und Erstarrung im Weltraum ist.

17. Präpolymer, das eine Struktur aufweist, die aus einer zentralen Einheit der nachfolgenden Formel (VI) gebildet ist: 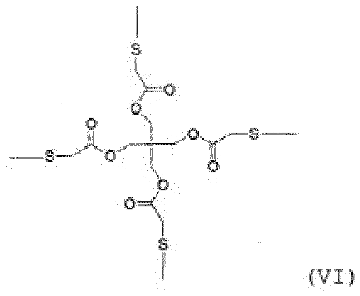 an die vier lineare Ketten gepfropft sind, gebildet durch die Wiederholung wenigstens einer sich wiederholenden Einheit der nachfolgenden Formel (I): 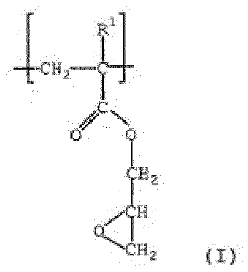 wobei R¹ ein Wasserstoffatom oder eine Methylgruppe repräsentiert.

18. Präpolymer nach Anspruch 17, das eine Struktur umfasst, gebildet durch eine zentrale Einheit der Formel (VI), an die vier lineare Ketten gepfropft sind, gebildet durch die zufällige Wiederholung wenigstens einer sich wiederholenden Einheit der Formel (I) und wenigstens einer Einheit der nachfolgenden Formel (II): 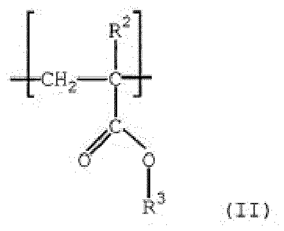 wobei R² ein Wasserstoffatom oder eine Methylgruppe repräsentiert, und wobei R³ eine Alkylgruppe mit gerader oder verzweigter Kette repräsentiert, die 1 bis 10 Kohlenstoffatome hat.

19. Präpolymer nach Anspruch 17 oder Anspruch 18, bei der die sich wiederholende Einheit der Formel (I) der nachfolgenden speziellen Formel (Ia) genügt:

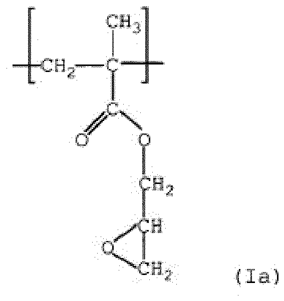

20. Präpolymer nach Anspruch 18, bei der die sich wiederholende Einheit der Formel (II) der nachfolgenden speziellen Formel (IIa) genügt:

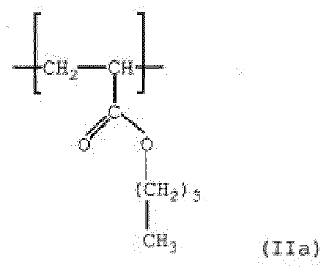

21. Struktur zur Entfaltung und Erstarrung im Weltraumvakuum, die ein Verbundmaterial umfasst, umfassend ein Fasermaterial, das mit einem härtbaren Harz wie in einem der Ansprüche 1 bis 13 definiert oder mit einer Mischung imprägniert ist, die dieses Harz und einen oder mehrere Zusatzstoffe enthält.

22. Struktur nach Anspruch 21, bei der das Fasermaterial ausgewählt ist aus der Gruppe gebildet durch Glasfasern, Quarzfasern, Kohlenstofffasern, Graphitfasern, Siliziumdioxidfasern, Metallfasern, Fasern von Poly(p-phenylen-benzobisoxazol), Aramidfasern, Polyethylenfasern, Polyesterfasern, Siliziumcarbidfasern und ihren Mischungen.

## Claims

1. Use of a curable resin containing a prepolymer comprising at least one recurrent unit of formula (I) hereafter: 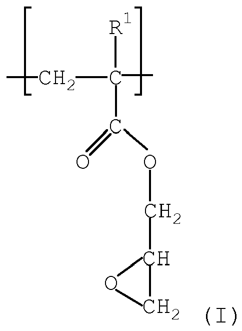 wherein R¹ represents a hydrogen atom or a methyl group, for making a composite material which is intended to be stiffened in the space vacuum by curing the curable resin which it contains.

2. Use according to claim 1, wherein the molar percentage of the recurrent unit of formula (I) in the prepolymer is from 20 to 100%.

3. Use according to claim 1, wherein the prepolymer comprises:
- at least one recurrent unit of formula (I); and
- at least one recurrent unit of formula (II) hereafter: 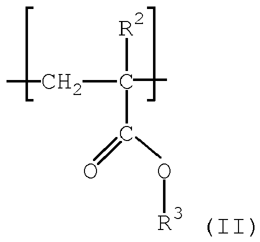 wherein R² represents a hydrogen atom or a methyl group and R³ represents an alkyl group with a linear or branched chain and having from 1 to 10 carbon atoms.

4. Use according to any of claims 1 to 3, wherein the recurrent unit of formula (I) fits the particular formula (Ia) hereafter:

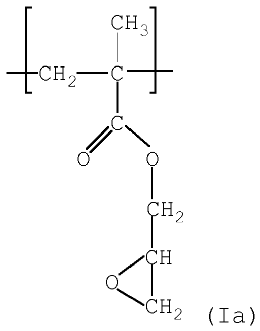

5. Use according to claim 3, wherein the recurrent unit of formula (II) fits the particular formula (IIa) hereafter:

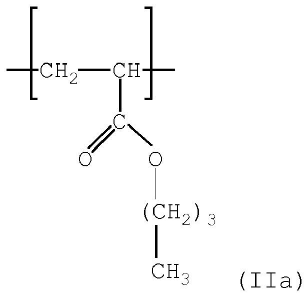

6. Use according to any of claims 3 to 5, wherein the prepolymer is a poly(glycidyl methacrylate-co-butyl acrylate).

7. Use according to any of claims 3 to 6, wherein the molar percentage of the recurrent unit of formula (I) in the prepolymer is from 40 to 70% while the molar percentage of the recurrent unit of formula (II) in the prepolymer is from 30 to 60%.

8. Use according to claim 7, wherein the molar percentage of the recurrent unit of formula (I) in the prepolymer is from 45 to 65% while the molar percentage of the recurrent unit of formula (II) in the prepolymer is from 35 to 55%.

9. Use according to any of the preceding claims, wherein the prepolymer was obtained by free-radical solution polymerization of at least one monomer formed by glycidyl (meth)acrylate.

10. Use according to any of claims 3 to 8, wherein the prepolymer was obtained by free-radical solution polymerization of at least one first monomer formed by glycidyl (meth)acrylate and of at least one second monomer formed by a (meth)acrylate of an alkyl with a linear or branched chain and having from 1 to 10 carbon atoms.

11. Use according to claim 9 or claim 10, wherein the free-radical polymerization was carried out via a thermal route or via a photochemical route.

12. Use according to any of the preceding claims, wherein the prepolymer has a structure consisting of a central unit of formula (VI) hereafter: 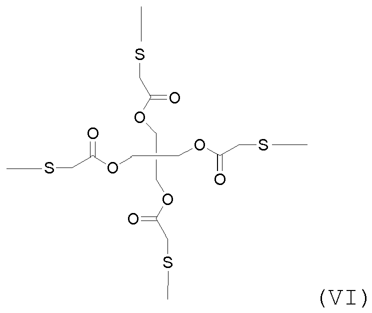 on which are grafted four linear chains formed by the recurrence of at least one recurrent unit of formula (I) .

13. Use according to any of claims 3 to 11, wherein the prepolymer has a structure consisting of a central unit of formula (VI) hereafter: 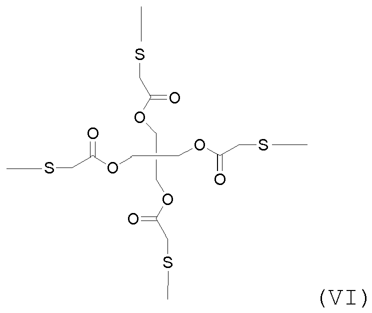 on which are grafted four linear chains formed by the random recurrence of at least one recurrent unit of formula (I) and of at least one recurrent unit of formula (II).

14. Use according to any of the preceding claims, wherein the composite material is made by impregnating a fibrous material with the curable resin or with a mixture comprising this resin and one or more additives of latent cross-linking initiator, cross-linking accelerator or inhibitor, anti-oxidant, compatibilizing agent, fillers, reactive or nonreactive diluent type.

15. Use according to claim 14, wherein the fibrous material is selected from the group formed by glass fibers, quartz fibers, carbon fibers, graphite fibers, silica fibers, methyl fibers, poly(p-phenylene benzobisoxazole) fibers, aramide fibers, polyethylene fibers, polyester fibers, silicon carbide fibers and mixtures thereof.

16. Use according to any of the preceding claims, wherein the composite material is a composite material for a structure to be deployed and stiffened in space.

17. Prepolymer which has a structure consisting of a central unit of formula (VI) hereafter: 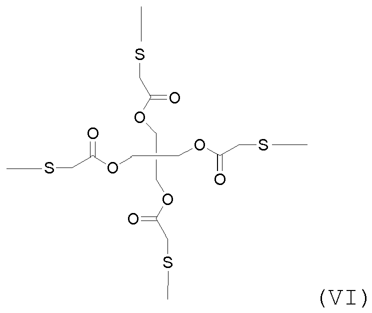 on which are grafted four linear chains formed by the recurrence of at least one recurrent unit of formula (I) hereafter: 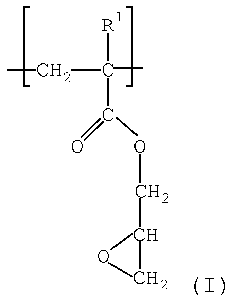 wherein R¹ represents a hydrogen atom or a methyl group.

18. Prepolymer according to claim 17, which comprises a structure consisting of a central unit of formula (VI), on which are grafted four linear chains formed by the random recurrence of at least one recurrent unit of formula (I) and of at least one unit of formula (II) hereafter: 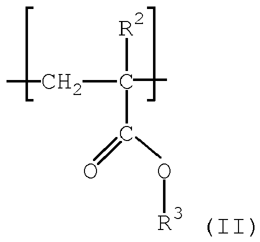 wherein R² represents a hydrogen atom or a methyl group and R³ represents an alkyl group with a linear or branched chain and having from 1 to 10 carbon atoms.

19. Prepolymer according to claim 17 or claim 18, wherein the recurrent unit of formula (I) fits the particular formula (Ia) hereafter:

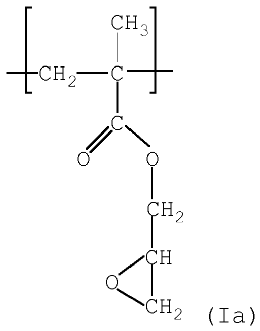

20. Prepolymer according to claim 18, wherein the recurrent unit of formula (II) fits the particular formula (IIa) hereafter:

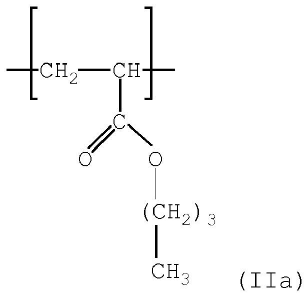

21. Structure for deployment and stiffening in the vacuum of space, which comprises a composite material comprising a fibrous material impregnated with a curable resin as defined in any of claims 1 to 13 or with a mixture comprising this resin and one or more additives.

22. Structure according to claim 21, wherein the fibrous material is selected from the group formed by glass fibers, quartz fibers, carbon fibers, graphite fibers, silica fibers, metal fibers, poly(p-phenylene benzobisoxazole) fibers, aramide fibers, polyethylene fibers, polyester fibers, silicon carbide fibers and mixtures thereof.
